# FASCICULE DE BREVET EUROPEEN

(11) **EP 1 051 079 B1**
(45) Date de publication et mention de la délivrance du brevet: **11.09.2002**
(21) Numéro de dépôt: 98958992.4
(22) Date de dépôt: 09.12.1998
(51) Int. Cl.: A23J 3/14, A23J 3/16, A23L 1/24, A23L 1/40

(54) **COMPOSITION A USAGE ALIMENTAIRE SOUS FORME D'UNE EMULSION SECHE, SON PROCEDE DE FABRICATION ET SON UTILISATION**
NAHRUNGSZUSAMMENSETZUNG IN FORM EINER TROCKENEMULSION, VERFAHREN ZUR HERSTELLUNG UND VERWENDUNG
FOOD COMPOSITION IN THE FORM OF A DRY EMULSION, PREPARATION METHOD AND USE THEREOF

(30) Priorité: 02.02.1998 FR 9801161
(43) Date de publication de la demande: 15.11.2000
(73) Titulaire: RHODIA CHIMIE, 92408 Courbevoie Cédex (FR)
(72) Inventeur: VASLIN, Sophie, F-92210 Saint-Cloud (FR); GUERIN, Gilles, F-95600 Eaubonne (FR); MORVAN, Mikel, F-92400 Belfort (FR)
(74) Mandataire: Dubruc, Philippe
(86) Numéro de dépôt international: FR9802670
(87) Numéro de publication internationale: WO99038387

(56) Documents cités:
- EP-A- 0 680 699
- DE-A- 4 424 085
- GB-A- 1 492 866
- US-A- 4 477 472
- DATABASE WPI Section Ch, Week 8441 Derwent Publications Ltd., London, GB; Class D11, AN 84-254275 XP002080889 & JP 59 154951 A (NISSHIN OIL MILLS LTD) , 4 septembre 1984
- DATABASE WPI Section Ch, Week 8606 Derwent Publications Ltd., London, GB; Class D13, AN 86-037908 XP002080890 & JP 60 256358 A (NISSHIN OIL MILLS LTD) , 18 décembre 1985
- BEATUS Y ET AL: "Spray-drying microencapsulation of paprika oleoresin." LEBENSMITTEL-WISSENSCHAFT UND -TECHNOLOGIE, vol. 18, no. 1, 1985, pages 28-34, XP002081697 Dep. of Food Eng. & Biotech., Technion-Israel Inst. of Tech., Technion City, Haifa, Israel

## Description

La présente invention a pour objet une émulsion sèche, son procédé de préparation, et son utilisation pour la fabrication des compositions à usage alimentaire.

Elle conceme plus particulièrement émulsions sèches, avantageusement sous forme de granulés, dispersables dans l'eau sous la forme d'émulsion huile dans eau et comprenant au moins une matière comestible peu hydrosoluble appelée également une matière active (MA).

Dans le cadre de la présente invention les matières actives (MA) peuvent notamment et surtout être sous forme liquide. Elles peuvent aussi être solides. En ce qui concerne certaines matières actives solides hydrophobes, peuvent se poser des problèmes de difficultés de manipulation dues à l'envolement desdites matières actives, ou de sensibilité vis-à-vis du milieu environnant.

Il convient de rappeler qu'une suspension est une dispersion d'un solide dans un liquide, et qu'une émulsion est une dispersion d'un liquide dans un autre liquide, les liquides étant non miscibles. Dans la suite de l'exposé, on utilisera le terme "dispersion" pour désigner aussi bien une émulsion qu'une suspension.

Dans certains domaines, et plus particulièrement dans celui de l'alimentation, on est conduit à utiliser et donc à préparer des formulations comportant des matières actives peu solubles dans l'eau et en général hydrophobes. L'une des possibilités de formulation est de préparer des dispersions dont la phase continue est aqueuse et la phase dispersée est une huile (émulsion huile dans eau).

Cependant, généralement on se trouve en face de problèmes liés à la stabilité physique et même chimique lors de la conservation de ces émulsions. En effet, d'une part, il est courant de constater une séparation de phases plus ou moins importante des constituants de l'émulsion et d'autre part, on peut être confronté à des problèmes de perte des propriétés de la matière active, ladite matière active pouvant se dégrader sous l'influence de l'eau par exemple par hydrolyse, par catalyse etc.

Enfin, il est connu que pour être facilement manipulables et pompables, les émulsions classiques huile dans eau présentent des teneurs relativement peu élevées en matière active et une quantité d'eau importante, d'où le problème économique dû au transport de cette quantité élevée d'eau, et de contamination bactérienne de celle-ci.

En outre, les émulsifiants généralement connus pour donner les émulsions susvisées sont surtout à base de produits animaux dont la filière semble sujette à caution.

Le document DE-A1-4424085 décrit l'utilisation de proteines de soja, partiellement hydrolysées dont le degré d'hydrolyse est compris entre 0,1 et 5% comme colloides protecteurs pour une matière active lipophilique.

Par ailleurs, il a été proposé de transformer des émulsions huile dans eau par séchage selon des techniques classiques comme par exemple la lyophilisation ou l'atomisation. Toutefois, les émulsions séchées résultantes comportent une teneur faible en matière active.

De plus, le séchage d'une émulsion n'est pas sans inconvénient. En effet, après séchage, il est essentiel que les émulsions sèches puissent se redisperser totalement ou presque totalement en présence d'un milieu liquide.

Par ailleurs, il existe sur le marché alimentaire des substituts des grandes sauces émulsionnées en particulier de la cuisine française telles que les sauces façon vinaigrette, façon mayonnaise, façon béarnaise etc., ou à base de roux notamment roux blond, roux brun, béchamel, sauce suprême etc.

Ces sauces de substitution présentent de nombreux inconvénients. Parmi ces inconvénients on peut citer, non seulement ceux que la ménagère accepte pour des raisons de rapidité d'utilisation comme l'absence de la sapidité, de la flaveur, de la délicatesse, et même de la texture des sauces, mais encore ceux engendrés par leur forme d'émulsion toute faite, notamment la nécessité de quantités d'eau élevées, ce qui en augmente le poids et accroît la fragilité chimique, et l'emploi en forte quantité de stabilisants chimiques et physiques.

Parmi d'autres problèmes que l'on peut mentionner la dispersion des graisses dans divers appareils culinaires, en particulier la dispersion dans divers pâtons de beurre, de graisses animales ou végétales, pour donner des pâtes levées comme brioches, miques, pompes, fougasses etc.

Un des buts de la présente invention est de proposer une nouvelle émulsion sèche, totalement ou presque totalement redispersable dans un milieu aqueux, et contenant des concentrations élevées en matière active peu hydrosoluble, notamment sous forme de liquide hydrophobe.

Un autre but de l'invention est de proposer une émulsion sèche de type ci-dessus à base de protéines végétales, la filière animale étant sujette à caution.

Un autre but de la présente invention est de proposer une composition à usage alimentaire du type sauce émulsionnée (chaude ou froide) ou phase grasse, obtenue à partir d'une émulsion sèche de type ci-dessus.

Ces buts et d'autres qui apparaîtront par la suite sont atteints au moyen d'une émulsion sèche caractérisée en ce qu'elle est obtenue par séchage d'une dispersion d'au moins une matière comestible peu hydrosoluble appelée également matière active (MA), dans une phase continue comportant :
- au moins un émulsifiant (E) contenant au moins une protéine végétale partiellement hydrolysée (lysat de protéine) dont le degré d'hydrolyse est compris entre 0 exclu et inférieur à 5%, et
- au moins un agent de remplissage interstitiel (ARI) hydrosoluble ou hydrodispersable contenant au moins une protéine végétale partiellement hydrolysée (lysat de protéine) dont le degré d'hydrolyse est compris entre 5 et 40 %.

L'invention a de même pour objet un procédé de préparation de telles émulsions, comprenant les étapes suivantes :
*i)* la première étape consiste à préparer une dispersion dans l'eau ou dans une phase aqueuse comprenant au moins une matière active hydrophobe (MA), au moins un émulsifiant (E), et au moins un agent de remplissage (ARI) ;
*ii)* la deuxième étape consiste à sécher ladite dispersion jusqu'à formation d'une émulsion sèche.

Elle conceme également l'utilisation des émulsions sèches de type ci-dessus, pour la fabrication des compositions à usage alimentaire

Par émulsion sèche on entend une poudre qui, lorsqu'on la met au contact d'une phase aqueuse (re)donne une émulsion dont la granulométrie est voisine de celle de l'émulsion avant séchage.

Le degré d'hydrolyse d'une protéine se définit par le pourcentage de liaisons peptidiques coupées. Le degre d'hydolyse peut être déterminé soit en utilisant des composés réagissant spécifiquement avec des groupements aminés engagés dans des liaisons peptiques, soit en titrant directement lesdits groupements aminés.

D'une manière générale, les lysats de protéines végétales selon l'invention, peuvent être obtenus par hydrolyse chimique ou enzymatique de la protéine.

Les conditions d'hydrolyse, qu'elles soient chimique ou enzymatique, sont bien connues de l'homme du métier. Selon le degré d'hydrolyse recherché, l'homme du métier saura adapter les conditions opératoires, pour une hydrolyse optimale. Les conditions d'hydrolyse sont notamment celles décrites dans Enzymic Hydrolysis of Food Proteins, Alder-Nissen, 1986, Elsevier Applied Science Publisher, London.

Selon la présente invention, pour réaliser l'émulsion il est souhaitable que la phase continue comporte au moins un émulsifiant (E) contenant au moins une protéine végétale partiellement hydrolysée, ou plus exactement de lysat de protéine végétale.

L'émulsifiant (E) est plus particulièrement une protéine végétale partiellement hydrolysée dont le degré d'hydrolyse est est compris entre 0 exclu et inférieur à 5 %.

Selon une mise en oeuvre particulièrement avantageuse de la présente invention, dans l'émulsifiant (E) les lysats comportent en fragment protéinique, en masse, au moins la moitié, avantageusement 2/3, de préférence 3/4 de fragments protéinique, au moins 10, de préférence au moins 15 acides aminés.

Il est également hautement souhaitable et financièrement avantageux que dans l'émulsifiant (E) les lysats comportent en fragment protéinique, en masse, au moins la moitié, avantageusement 2/3, de préférence 3/4 de fragments protéiniques d'au plus environ 200 acides aminés, avantageusement au plus environ 100 acides aminés.

Encore plus préférentiellement, ces lysats comportent en fragment protéinique, en masse, au moins la moitié, avantageusement 2/3, de préférence 3/4 de fragments protéiniques présentant entre 10 et 100 acides aminés, avantageusement entre 15 et environ 70 acides aminés.

Dans le cadre de la présente invention, l'émulsifiant (E) peut contenir une ou un mélange de protéines végétales partiellement hydrolysées telle que mentionnées plus haut.

Outre le lysat de protéine tel que précisé ci-dessus, l'émulsifiant (E) peut contenir, d'autres agents connus en eux-mêmes pour leur action émulsifiante peuvent être employés.

Dans la présente description, le terme émulsifiant couvre également le terme dispersant pour les cas où la matière active est un solide.

Pour une bonne réalisation de l'invention, dans la phase continue l'émulsifiant (E) est présent en une quantité inférieure à 10 %, et de préférence entre 1 et 3 %, exprimée en pourcentage massique par rapport à la matière active.

Dans le cadre de la présente invention, la phase continue comporte, en outre, un agent de remplissage interstitiel (ARI) hydrosoluble ou hydrodispersable pouvant être choisi parmi les protéines végétales partiellement hydrolysées (lysat de protéine).

L'agent de remplissage interstitiel (ARI) est plus particulièrement une protéine végétale partiellement hydrolysée dont le degré d'hydrolyse est est compris entre 5 et 40 %.

Cet agent interstitiel (ARI) doit présenter une hydrosolubilité, exprimée en masse de soluté sur masse solvant, d'au moins égale à 1%.

Il est très hautement souhaitable que l'agent de remplissage interstitiel (ARI) comporte une forte proportion de composés présentant des fonctions susceptibles de donner des liaisons dites "hydrogène" (fonction acide, amide, amine, alcool, thiol,....).

Il est également très hautement souhaitable que ledit agent de remplissage interstitiel (ARI) ne présente pas de risque de cristallisation dans les conditions opératoires et notamment en présence de l'émulsifiant.

Dans la phase continue, l'agent de remplissage interstitiel (ARI) est présent en une quantité d'au moins 10 % et d'au plus 80 %, exprimée en pourcentage massique par rapport à la matière sèche totale.

Plus particulièrement, l'agent de remplissage interstitiel (ARI) est présent en une quantité comprise entre 20 % et 60 %, exprimée en pourcentage massique par rapport à la matière sèche totale.

L'agent de remplissage interstitiel (ARI) est obtenu d'un lyse plus poussé de protéines végétales, notamment pour donner des fragments protéiniques dont au moins 2/3 en masse d'entre eux, sont d'au plus environ 50 acides aminés, de préférence au plus 20 acides aminés.

Parmi les protéines d'origine végétale pouvant conduire, après un lyse plus ou moins poussé selon les cas, respectivement à l'agent interstitiel (ARI) et à l'émulsifiant (E), on peut mentionner à titre indicatif les protéines provenant des graines protéagineuses notamment celles de pois, de féverole, de lupin, de haricot, et de lentille ; les protéines provenant de grains de céréales notamment celles du blé, de l'orge, du seigle, du maïs, du riz, de l'avoine, et du millet ; les protéines provenant des graines oléagineuses notamment celles du soja, de l'arachide, du toumesol, du colza, du sénevé (notamment moutarde) et de la noix de coco (coprah) ; les protéines provenant des feuilles notamment de luzerne, et d'orties ; et les protéines provenant d'organes végétaux de réserves enterrées notamment celles de pomme de terre, et de betterave.

D'une manière préférentielle, ledit lysat est un hydrolysat de protéine provenant du soja ou du blé.

L'agent de remplissage interstitiel (ARI) peut contenir un ou un mélange de lysats de protéines répondant aux critères susmentionnés.

Outre lesdits lysats, l'agent (ARI) peut comporter des sucres et/ou des oligomères de ces derniers. A ce titre, on peut citer par exemple les polyols et notamment les sucres et les hydroxyacides.

Selon une variante de réalisation de l'invention, l'agent de remplissage interstitiel (ARI) comporte au moins une fraction "osique" choisie parmi les oses, les osides ou un polyholosides (polysaccharides) hydrosolubles ou hydrodispersables, et leurs mélanges, et ce avantageusement jusqu'à 50%, de préférence jusqu'à 20 % de la masse de la somme de l'agent de remplissage interstitiel (ARI) et de l'émulsifiant (E).

Parmi les oses on peut mentionner les aldoses tels que le glucose, le mannose, le galactose, le ribose, et les cétoses tels que le fructose.

Les osides sont des composés qui résultent de la condensation, avec élimination d'eau, de molécules d'oses entre elles ou encore de molécules d'oses avec des molécules non glucidiques. Parmi les osides on préfère les holosides qui sont formés par la réunion de motifs exclusivement glucidiques et plus particulièrement les oligoholosides (ou oligosaccharides) qui ne comportent qu'un nombre restreint de ces motifs, c'est-à-dire un nombre en général inférieur ou égal à 10. A titre d'exemples d'oligoholosides, on peut mentionner le saccharose, le lactose, la cellobiose, le maltose et le tréhalose présentant de préférence un point de fusion supérieur à 100°C et une solubilité dans l'eau comprise entre 50 et 500 g/l.

Les polyholosides (ou polysaccharides) fortement dépolymérisés convenables sont décrits par exemple dans l'ouvrage de P. ARNAUD intitulé "cours de chimie organique", Gaultier-Villars éditeurs, 1987. Plus particulièrement, ces polyholosides ont une masse moléculaire en poids inférieure à 5000 g/mole.

A titre d'exemple non limitatif de polyholosides fortement dépolymérisés, on peut citer le dextran, l'amidon, la gomme xanthane et les galactomannanes tels que le guar ou la caroube.

Comme mentionné précédemment, l'émulsion sèche selon l'invention est obtenue par séchage d'une dispersion d'au moins une matière comestible peu hydrosoluble, appelée également matière active (MA), dans une phase continue.

Toutes les matières actives (MA), qu'elles soient solides, liquides (telles quelles ou en solution dans un solvant) conviennent à l'invention, dans la mesure où elles ne sont que faiblement miscibles, avantageusement très faiblement, de préférence ne sont pas miscibles dans l'eau.

Par faiblement miscible, on entend des matières actives dont la solubilité dans l'eau à pH 7 et dans les conditions normales ne dépasse pas 10 % en masse.

Par très faiblement miscible, on entend des matières actives dont la solubilité dans l'eau à pH 7 et dans les conditions normales ne dépasse pas 5 % en masse.

Par non miscible, on entend des matières actives dont la solubilité dans l'eau à pH 7 et dans les conditions normales ne dépasse pas 1 % en masse.

D'une manière préférentielle, ladite matière active (MA) hydrophobe a un point de fusion inférieur à environ 100°C ; tout particulièrement, celle-ci est liquide à température ordinaire.

Par la suite, on entendra par matière active (MA), soit la matière active pure (qui peut elle-même être un solvant), soit la matière active solubilisée dans un solvant (bien entendu acceptable pour les composés alimentaires, par exemple les huiles).

A titre d'exemples non limitatifs, les matières actives (MA) utilisées dans le domaine de l'alimentaire peuvent être choisies parmi les mono-, di- et triglycérides, les huiles essentielles, les colorants, les arômes alimentaires, les oléorésines, les extraits, les huiles alimentaires telles que l'huile de tournesol, l'huile de soja, l'huile de pépins de raisin.

Lorsque la matière active (MA) est un solvant (ou un mélange de solvants) ou une solution dans un solvant (ou plusieurs solvants), ledit solvant n'est pas ou n'est que peu miscible dans l'eau au sens indiqué précédemment. A titre d'exemples, on peut citer les composés terpéniques comme le D-limonène, ou encore le L-limonène, certains esters aliphatiques, comme les esters méthyliques ou éthyliques notamment succinique et glutarique, les huiles paraffiniques comme l'huile de vaseline, les triglycérides de synthèse ou naturels.

Il est souhaitable que le rapport massique sur sec entre la matière active (MA) et la somme de la matière active (MA), de l'agent de remplissage interstitiel (ARI) et de l'émulsifiant (E) soit au moins égal à environ 0,2, avantageusement au moins égal à 0,6. Ce rapport massique est d'au plus égal à 0,9.

Un autre objet de l'invention consiste en un procédé de préparation, en deux étapes, d'émulsions sèches, comprenant les étapes ci-après :
*i*) la première étape consiste à préparer une dispersion dans l'eau ou dans une phase aqueuse comprenant au moins une matière active hydrophobe (MA), au moins un émulsifiant (E), et au moins un agent de remplissage (ARI) ;
*ii)* la deuxième étape consiste à sécher ladite dispersion jusqu'à formation d'une émulsion sèche.

La dispersion préparée dans l'étape *(i)* présente la granulométrie suivante :
□ le d₈₀, avantageusement le d₉₀, est au plus égal à environ 50 µm (micromètre), avantageusement à environ 30 µm, de préférence à 10 µm ;
□ le d₂₀, avantageusement le d₁₀ est au moins égal à environ 0,1 µm, avantageusement à 0,5 µm, de préférence à 1 µm (micromètre).

Pour le séchage de la dispersion (étape *ii)*, on peut notamment utiliser l'atomisation ou, pour les matières fragiles, la lyophilisation.

Lorsque la matière active (MA) présente un point de fusion inférieur à 100°C ou bien se présente sous forme liquide à température ambiante, on peut mettre en oeuvre, à la température adaptée, toutes les méthodes de préparation d'émulsions connues de l'homme du métier et qui sont décrites dans "ENCYCLOPEDIA of EMULSIONS TECHNOLOGY", volumes 1 à 3 de Paul BECHER édités par MARCEL DEKKER INC., 1983.

Ainsi, la méthode dite d'émulsification en phase directe convient plus particulièrement à la préparation des émulsions sèches selon l'invention. Il est rappelé brièvement que cette méthode consiste à préparer un mélange contenant l'eau ou la phase aqueuse, l'émulsifiants (E) et l'agent interstitiel (ARI), puis à introduire la matière active (MA) sous forme liquide, sous agitation.

On peut aussi préparer l'émulsion en mettant en oeuvre des broyeurs colloïdaux tels que MENTON GAULIN et MICROFLUIDIZER (MICROFLUIDICS).

L'émulsification peut être réalisée à une température voisine de la température ambiante, c'est-à-dire voisisne de 20°C, bien que des températures plus faibles ou plus élevées (cas des produits dont le point de fusion est supérieur à 20°C) soient envisageables.

La seconde étape du procédé de préparation selon l'invention consiste à sécher l'émulsion formulée en *(i)* pour obtenir des émulsions sèches.

L'émulsion sèche ainsi obtenue se présente avantageusement sous forme de granulés, granulés qui présentent une granulométrie telle que :
□ le d₈₀, avantageusement le d₉₀ est au plus égal à 500 µm (micromètres), avantageusement à 200 µm, de préférence 150 µm ;
□ le d₂₀, avantageusement le d₁₀ est au moins égal à 5 µm (micromètres), avantageusement à 10 µm, de préférence à 20 µm.

La méthode mise en oeuvre pour éliminer l'eau de l'émulsion et obtenir avantageusement des granulés peut être effectuée par tout moyen connu de l'homme du métier.

Conviennent par exemple la lyophilisation, qui correspond à une étape de congélation, suivie d'une étape de sublimation, ou bien le séchage par atomisation, ou encore le séchage sur cylindre.

Les protéines d'origine végétale hydrosolubles ou hydrodispersables sont particulièrement bien adaptées au séchage par atomisation, car elles sont particulièrement stables.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence comprise entre 100 et 115°C et la température de sortie est de préférence comprise entre 55 et 65°C.

Les modes de séchage mentionnés ci-dessus, et plus particulièrement celui par atomisation, sont particulièrement indiqués car ils permettent de conserver la granulométrie de l'émulsion en l'état au cours du séchage et d'obtenir avantageusement des granulés.

Dans la présente description, les caractéristiques de granulométrie font référence à des notations du type dₙ où n est un nombre de 1 à 99. Cette notation signifie que n % en volume des particules présente une taille inférieure ou égale à ladite taille.

Les émulsions sèches obtenues sont aisément redispersables dans l'eau ou une phase aqueuse, pour donner à nouveau une émulsion présentant une granulométrie voisine de celle de l'émulsion initiale.

Les émulsions sèches selon la invention, avantageusement sous forme de granulés, présentent de nombreux avantages et de nombreuses applications.

Tout d'abord, lorsque la matière active (MA) est liquide, cette mise en forme permet d'éviter tous les problèmes dus à l'emploi d'émulsions. Ainsi, les problèmes d'instabilité au stockage tels que notamment le crémage, la floculation, le mûrissement et la coalescence, sont évités. Ces différents phénomènes sont décrits dans "ENCYCLOPEDIA of EMULSIONS TECHNOLOGY", volume 1 par Paul BECHER aux éditions MARCEL DEKKER INC., 1983.

Un autre avantage de la présente invention est que les concentrations en matières actives (MA), notamment liquides peuvent être très élevées en comparaison avec les émulsions classiquement connues tout en restant facilement manipulables. Par conséquent, lors de l'utilisation de ces émulsions sèches avantageusement sous forme de granulés, une plus faible quantité de granulés sera suffisante.

Par ailleurs, la mise en forme selon l'invention permet de protéger ladite matière active (MA) liquide ou solide, lorsque celle-ci est fragile (sensibilité à l'hydrolyse, volatilité ...).

Ces émulsions sèches sont en outre très aisément mélangées à des poudres et ce d'une manière suffisamment homogène avant l'addition de la phase aqueuse.
Ceci permet en particulier de faire des mélanges de poudres avec (liste non exhaustive) :
■ des farines ;
■ des levures notamment lyophilisées ;
■ les poudres levantes (carbonates) ;
■ des agents (solides) de sapidité, y compris le sel et le poivre, les glutamates ;
■ le sucre ;
■ les poudres d'agent texturant ;
■ de tampons (pH) solides ;
■ des sels notamment d'oligoélément(s) ;
■ des vitamines hydrosolubles telles que les ascobates el l'acide ascorbique :
■ des acides solides comme l'acide citrique ;
■ des herbes aromatiques ;
avec d'autre émulsion sèche dont le contenu ne doit être mélangé qu'au dernier moment.

Les émulsions sèches selon l'invention, au contact de l'eau ou d'une phase aqueuse redonne aisément une dispersion permettant de réaliser des préparations notamment pour sauces émulsionnées et de phase grasse.

L'invention a également pour objet l'utilisation des émulsions sèches mentionnées plus haut, pour la fabrication des compositions à usage alimentaire.

Ainsi, la présente invention peut fournir une émulsion sèche qui permette, par addition de l'eau ou d'une phase aqueuse, la fabrication d'une composition à usage alimentaire telle que les sauces "façon vinaigrette", "façon mayonnaise", "façon gribiche", "façon roux".

De plus, la présente invention peut fournir une émulsion sèche qui permette, par addition de l'eau ou d'une phase aqueuse et par chauffage, l'obtention d'une composition à usage alimentaire chaude telle que les sauces "façon béarnaise", "façon choron", "façon maltaise", "façon hollandaise", "façon beurre blanc", "façon beurre rouge".

Le simple mélange d'une émulsion sèche avec une phase aqueuse (eau, vinaigres divers, jus de citron, verjus, avec d'éventuels ingrédients) éventuellement avec chauffage, conduit à une composition suffisamment stable, même sans précaution particulière, pour la durée du service.

De plus, l'utilisation de lysats de protéines végétales s'est révélée particulièrement satisfaisante pour réaliser des sauces émulsionnées chaudes.

Par ailleurs, les arômes liposolubles entrant dans la constitution des sauces sont avantageusement sous forme d'une, ou plusieurs, émulsion sèche ou dissous dans l'émulsion sèche.

Ainsi, la présente invention est de fournir une émulsion sèche qui permette, par addition de l'eau ou d'une phase aqueuse et d'une farine lorsqu'elle n'en contient pas, la fabrication d'une composition à usage alimentaire du type phase grasse façon brioche ou façon fougasse (à l'huile).

Des prémélanges d'émulsion sèche de matière grasse avec diverses farines permettent de réaliser des préparations pour béchamel.

Des prémélanges de farines diverses avec des levures lyophilisées et des émulsion sèches permettent de préparer des appareils de type brioches, blini et crèpes.

Les exemples suivants sont donnés à titre illustratif et non limitatif.

### Exemples

### Exemple 1 :

### Réalisation d'une émulsion d'huile essentielle d'orange dans une solution aqueuse de protéine de sofa

On prépare un mélange de composition suivante :

| | |
|---|---|
| □ FP940 (hydrolysat de proteine de soja de degré d'hydrolyse inférieur à 5%, de Protein Technologies International ) | 0,6 partie en poids |
| □ Huile essentielle d'orange (Givaudan-Roure) | 30 parties en poids |
| □ Eau permutée | 69,4 parties en poids |

par addition d'huile essentielle à une solution aqueuse à 5% en poids de FP940.

Le taux de matière séche est de 30,6%.

Le mélange est d'abord pré-émulsionné à l'aide d'un appareil Ultra Turrax T25 durant 1 minute à 9500 tr/mn.

L'émulsion proprement dite est réalisée au moyen d'un microfluidiseur (M110T de Microfluidics) dans les conditions suivantes :
□ Pression : 500 bars,
□ 3 passages dans le microfluidiseur,
□ Bain d'eau froide en sortie du microfluidiseur.

L'émulsion obtenue présente une granulométrie resserrée avec un d₅₀ de 1,8µm.

### Incorporation de la matrice (agent de remplissage interstitiel)

On incorpore à l'émulsion préparée 6,9 g d'une protéine végétale hydrolysée à 15% (FP900 de Protein Technologies International) comme matrice ou agent de remplissage interstitiel.

Cette émulsion formulée présente 35,1 % de matière sèche et un d₅₀ de 1,8µm.

La composition de cette émulsion correspond à un rapport pondéral en sec A/B de 80/20, rapport dans lequel A et B ont la signification suivante :
A = huile essentielle / % total matière sèche x 100
B = proteines FP900 + FP 940 / % total matière sèche x 100

### Séchage de l'émulsion formulée

Cette émulsion est ensuite séchée par lyophilisation. Les granulés issus de ce traitement ont la composition suivante :

| | |
|---|---|
| □ FP940 (hydrolysat de proteine de soja de degré d'hydrolyse inférieur à 5%, de Protein Technologies International) (émulsifiant) | 1,6 partie en poids |
| □ Huile essentielle | 80 parties en poids |
| □ FP900 (hydrolysat de proteine de soja de degré d'hydrolyse de 15%, de Protein Technologies International ) (agent de remplissage interstitiel ou matrice) | 18,4 parties en poids |

La redispersion des granulés dans l'eau donne à nouveau une émulsion d'huile essentielle de distribution granulométrique assez homogène et de diamètre médian (d₅₀) de 5 µm.

### Exemple 2 :

### Réalisation d'une émulsion d'huile essentielle d'orange dans une solution aqueuse de protéine de soja et de saccharose

On prépare un mélage de composition suivante

| | |
|---|---|
| □ FP940 (hydrolysat de proteine de soja de degré d'hydrolyse inférieur à 5%, de Protein Technologies International) | 0,4 partie en poids |
| □ Huile essentielle d'orange (Givaudan-Roure) | 20 parties en poids |
| □ Eau permutée | 79,6 parties en poids |

par addition d'huile essentielle à une solution aqueuse à 5% en poids de FP940.

Le taux de matière sèche est de 20,4%.

Le mélange est d'abord pré-émulsionné à l'aide d'un Ultra Turrax T25 durant 1 minute à 9500 tr/mn.

L'émulsion proprement dite est réalisée au moyen d'un microfluidiseur (M110T de Microfluidics) dans les conditions suivantes :
□ Pression : 500 bars,
□ 3 passages dans le microfluidiseur,
□ Bain d'eau froide en sortie du microfluidiseur.

L'émulsion obtenue présente une granulométrie resserrée avec un d₅₀ de 2 µm.

### Incorporation de la matrice (agent de remplissage interstitiel)

On incorpore à l'émulsion préparée 2,3 g d'une protéine végétale hydrolysée à 15% (FP900 de Protein Technologies International) et 2,3 g de saccharose comme matrice ou agent de remplissage interstitiel.

Cette émulsion formulée présente 23,9 % de matière sèche et un d₅₀ de 2 µm.

La composition de cette émulsion correspond à un rapport pondéral en sec A/B de 60/40, rapport dans lequel A et B ont la signification suivante :
A = (huile essentielle / % total matière sèche x 100
B = proteines FP900 + FP 940 + saccharose/ % total matière sèche x 100

### Séchage de l'émulsion formulée

Cette émulsion est ensuite séchée par lyophilisation. Les microcapsules ou granulés issus de ce traitement ont la composition suivante :

| | |
|---|---|
| □ FP940 (hydrolysat de proteine de soja de degré d'hydrolyse inférieur à 5%, de Protein Technologies International ) (émulsifiant) | 1,6 partie en poids |
| □ Huile essentielle | 80 parties en poids |
| □ FP900 (hydrolysat de proteine de soja de degré d'hydrolyse de 15%, de Protein Technologies International) + saccharose (agent de remplissage interstitiel ou matrice) | 9,2 parties en poids 9,2 parties en poids |

La redispersion des microcapsules ou granulés dans l'eau donne à nouveau une émulsion d'huile essentielle de distribution granulométrique assez homogène (un d₅₀ de 5 µm).

### Exemple 3 :

### Réalisation d'une émulsion d'huile de sofa dans une solution aqueuse de protéine de soja

On prépare un mélange de composition suivante :

| | |
|---|---|
| □ FP940 (hydrolysat de proteine de soja de degré d'hydrolyse inférieur à 5%, de Protein Technologies International | 0,6 partie en poids |
| □ Huile de soja | 30 parties en poids |
| □ Eau permutée | 69,4 parties en poids |

par addition d'huile essentielle à une solution aqueuse à 5% en poids de FP940.

Le taux de matière séche est de 30,6%.

Le mélange est d'abord pré-émulsionné à l'aide d'un de l'appareil Ultra Turrax T25 durant 1 minute à 9500 tr/mn.

L'émulsion proprement dite est réalisée au moyen d'un microfluidiseur (M110T de Microfluidics) dans les conditions suivantes :
□ Pression : 500 bars,
□ 3 passages dans le microfluidiseur,
□ Bain d'eau froide en sortie du microfluidiseur.

L'émulsion obtenue présente une granulométrie resserrée avec un d₅₀ de 5 µm.

### Incorporation de la matrice (agent de remplissage interstitiel)

On incorpore à l'émulsion préparée 12,9 g une protéine végétale hydrolysée à 15% (FP900 de Protein Technologies International) comme matrice ou agent de remipissage interstitiel.

Cette émulsion formulée présente 38,5 % de matière sèche et un d₅₀ de 5 µm.

La composition de cette émulsion correspond à un rapport pondéral en sec A/B de 60/40, rapport dans lequel A et B ont la signification suivante :
A = (huile essentielle / % total matière sèche x 100
B = proteines FP900 + FP 940/% total matière sèche x 100

### Séchage de l'émulsion formulée

Cette émulsion est ensuite séchée par lyophilisation. Les granulés issus de ce traitement ont la composition suivante :

| | |
|---|---|
| □ FP940 (hydrolysat de proteine de soja de degré d'hydrolyse inférieur à 5%, de Protein Technologies International ) (émulsifiant) | 3,2 partie en poids |
| □ Huile essentielle | 60 parties en poids |
| □ FP900 (hydrolysat de proteine de soja de degré d'hydrolyse de 15%, de Protein Technologies International) (agent de remplissage ou matrice) | 36,8 parties en poids |

La redispersion des granulés dans l'eau donne à nouveau une émulsion d'huile essentielle de distribution granulométrique assez homogène (un d₅₀ de 10 µm).

## Revendications

1. Emulsion sèche **caractérisée en ce qu'**elle est susceptible d'être obtenue par séchage d'une dispersion d'au moins une matière comestible peu hydrosoluble appelée également matière active (MA) dans une phase continue comportant :
- au moins un émulsifiant (E) contenant au moins une protéine végétale partiellement hydrolysée ou lysat de protéine dont le degré d'hydrolyse est compris entre 0 exclu et inférieur à 5%, et
- au moins un agent de remplissage interstitiel (ARI) hydrosoluble ou hydrodispersable contenant au moins une protéine végétale partiellement hydrolysée ou lysat de protéine dont le degré d'hydrolyse est compris entre 5 et 40 %.

2. Emulsion sèche selon la revendication 1, **caractérisée en ce que** dans l'émulsifiant (E) le lysat comporte en fragment protéinique, en masse, au moins la moitié, avantageusement 2/3, de préférence 3/4 de fragments protéinique, au moins 10, de préférence au moins 15 acides aminés.

3. Emulsion sèche selon l'une des revendications 1 ou 2, **caractérisée en ce que** dans l'émulsifiant (E) le lysat comporte en fragment protéinique, en masse, au moins la moitié, avantageusement 2/3, de préférence 3/4 de fragments protéiniques au plus environ 200 acides aminés, avantageusement au plus environ 100 acides aminés.

4. Emulsion sèche selon l'une quelconque des revendications 1 à 3, **caractérisée en ce que** dans l'émulsifiant (E) le lysat comporte en fragment protéinique, en masse, au moins la moitié, avantageusement 2/3, de préférence 3/4 de fragments protéiniques présentant entre 10 et 100 acides aminés, avantageusement entre 15 et 70 acides aminés.

5. Emulsion sèche selon l'une quelconque des revendications 1 à 4, **caractérisée en ce que** dans la phase continue, l'émulsifiant (E) est présent en une quantité inférieure à 10 %, et de préférence entre 1 et 3 %, exprimée en pourcentage massique par rapport à la matière active.

6. Emulsion sèche selon l'une quelconque des revendications précédentes, **caractérisée en ce que** l'agent de remplissage interstitiel (ARI) présente une hydrosolubilité, exprimée en masse de soluté sur masse solvant, d'au moins égale à 1%.

7. Emulsion sèche selon l'une quelconque des revendications 1 à 6, **caractérisée en ce que** dans la phase continue, l'agent de remplissage interstitiel (ARI) est présent en une quantité d'au moins 10 % et d'au plus 80 %, exprimée en pourcentage massique par rapport à la matière sèche totale.

8. Emulsion sèche selon la revendication 7, **caractérisée en ce que** l'agent de remplissage interstitiel (ARI) est présent en une quantité comprise entre 20 % et 60 %, exprimée en pourcentage massique par rapport à la matière sèche totale.

9. Emulsion sèche selon l'une quelconque des revendications 1 à 8, **caractérisée en ce que** l'agent de remplissage interstitiel (ARI) est obtenu d'un lyse plus poussé notamment pour donner des fragments protéiniques sont au moins 2/3 en masse d'entre eux, sont d'au plus environ 50 acides aminés, de préférence au plus 20 acides aminés.

10. Emulsion sèche selon l'une quelconque des revendications 1 à 9, **caractérisée en ce que** l'agent de remplissage interstitiel (ARI) comporte des sucres et/ou des oligomères de ces derniers.

11. Emulsion sèche selon l'une quelconque des revendications 1 à 10, **caractérisée en ce que** l'agent de remplissage interstitiel (ARI) comporte au moins une fraction "osique" choisie parmi les oses, les osides ou un polyholosides (polysaccharides) hydrosolubles ou hydrodispersables, et leurs mélanges, et ce avantageusement jusqu'à 50%, de préférence jusqu'à 20 % de la masse de la somme de l'agent de remplissage interstitiel (ARI) et de l'émulsifiant (E).

12. Emulsion sèche selon l'une quelconque des revendications précédentes, **caractérisée en ce que** les matières actives (MA) utilisées dans le domaine de l'alimentaire, sont choisies parmi les mono-, di- et triglycérides, les huiles essentielles, les colorants, les arômes alimentaires, les oléorésines, les extraits, les huiles alimentaires telles que l'huile de tournesol, l'huile de soja, l'huile de pépins de raisin.

13. Emulsion sèche selon l'une quelconque des revendications, **caractérisée en ce que** le rapport massique sur sec entre la matière active (MA) et la somme de la matière active (MA), de l'agent de remplissage interstitiel (ARI) et de l'émulsifiant (E) est au moins égal à 0,2, avantageusement au moins égal à 0,6.

14. Emulsion sèche selon l'une quelconque des revendications, **caractérisée en ce que** le rapport massique sur sec entre la matière active (MA) et la somme de la matière active (MA), de l'agent de remplissage interstitiel (ARI) et de l'émulsifiant (E) est au plus égal à 0,9.

15. Procédé de préparation, en deux étapes, d'émulsions sèches selon l'une quelconque des revendications 1 à 14, comprenant les étapes ci-après :
*i)* la première étape consiste à préparer une dispersion dans l'eau ou dans une phase aqueuse comprenant au moins une matière active hydrophobe (MA), au moins un émulsifiant (E), et au moins un agent de remplissage (ARI) ;
*ii)* la deuxième étape consiste à sécher ladite dispersion jusqu'à formation d'une émulsion sèche.

16. Procédé selon la revendication précédente **caractérisé en ce que** la dispersion préparée dans l'étape *(i)* présente la granulométrie suivante :
□ le d₈₀, avantageusement le d₉₀, est au plus égal à 50 µm (micromètre), avantageusement à 30 µm, de préférence à 10 µm ;
□ le d₂₀, avantageusement le d₁₀ est au moins égal à 0,1 µm, avantageusement à 0,5 µm, de préférence à 1 µm (micromètre).

17. Procédé selon l'une des revendications 15 ou 16, **caractérisé en ce que** les émulsions sèches se présentent, avantageusement sous forme de granulés, granulés qui présentent une granulométrie telle que :
□ le d₈₀, avantageusement le d₉₀ est au plus égal à 500 µm (micromètres), avantageusement à 200 µm, de préférence 150 µm ;
□ le d₂₀, avantageusement le d₁₀ est au moins égal à 5 µm (micromètres). avantageusement à 10 µm, de préférence à 20 µm.

18. Utilisation des émulsions sèches selon l'une quelconque des revendications 1 à 14, pour la fabrication de composition à usage alimentaire du type sauce émulsionnée telle que les sauces "façon vinaigrette", "façon mayonnaise", "façon gribiche", "façon roux".

19. Utilisation des émulsions sèches selon l'une quelconque des revendications 1 à 14, pour la fabrication de composition à usage alimentaire du type sauce émulsionnée telle que les sauces "façon béarnaise", "façon choron", "façon maltaise", "façon hollandaise", "façon beurre blanc", "façon beurre rouge".

20. Utilisation des émulsions sèches selon l'une quelconque des revendications 1 à 14, pour la fabrication de composition à usage alimentaire du type phase grasse façon brioche ou façon fougasse à l'huile.

21. Composition à usage alimentaire du type sauce émulsionnée ou phase grasse comprenant une émulsion sèche selon l'une quelconque des revendications 1 à 14.

## Claims

1. A dry emulsion, **characterized in that** it can be obtained by drying a dispersion of at least one slightly hydrosoluble food substance also termed the active ingredient (AI) in a continuous phase comprising:
• at least one emulsifying agent (E) containing at least one partially hydrolysed vegetable protein (or protein lysate) with a degree of hydrolysis in the range 0 (excluded) to less than 5%; and
• at least one hydrosoluble or hydrodispersible interstitial filling agent (IFA) containing at least one partially hydrolysed vegetable protein (or protein lysate) with a degree of hydrolysis in the range 5% to 40%.

2. A dry emulsion according to claim 1, **characterized in that** at least half, advantageously 2/3, preferably 3/4 by weight of the protein fragments in the lysate of the emulsifying agent (E) is comprised of protein fragments with at least 10, preferably at least 15 amino acids.

3. A dry emulsion according to claim 1 or claim 2, **characterized in that** at least half, advantageously 2/3, preferably 3/4 by weight of the protein fragments in the lysate of the emulsifying agent (E) is comprised of protein fragments with at most about 200 amino acids, advantageously at most about 100 amino acids.

4. A dry emulsion according to any one of claims 1 to 3, **characterized in** at least half, advantageously 2/3, preferably 3/4 by weight of the protein fragments in the lysate of the emulsifying agent (E) is comprised of protein fragments with 10 to 100 amino acids, advantageously 15 to 70 amino acids.

5. A dry emulsion according to any one of claims 1 to 4, **characterized in that** in the continuous phase, the emulsifying agent (E) is present in a quantity of less than 10%, and preferably in the range 1% to 3%, expressed as the percentage by weight with respect to the active ingredient.

6. A dry emulsion according to any one of the preceding claims, **characterized in that** the hydrosolubility of the interstitial filling agent (IFA), expressed as the mass of solute over the mass of solvent, is at least 1%.

7. A dry emulsion according to any one of claims 1 to 6, **characterized in that** in the continuous phase, the interstitial filling agent (IFA) is present in a quantity of at least 10% to at most 80%, expressed as the percentage by weight with respect to the total dry matter content.

8. A dry emulsion according to claim 7, **characterized in that** the interstitial filling agent (IFA) is present in a quantity in the range 20% to 60%, expressed as the percentage by weight with respect to the total dry matter content.

9. A dry emulsion according to any one of claims 1 to 8, **characterized in that** the interstitial filling agent (IFA) is obtained by more effective lysis, in particular to produce protein fragments wherein at least 2/3 by weight have at most about 50 amino acids, preferably at most 20 amino acids.

10. A dry emulsion according to any one of claims 1 to 9, **characterized in that** the interstitial filling agent (IFA) comprises sugars and/or oligomers thereof.

11. A dry emulsion according to any one of claims 1 to 10, **characterized in that** the interstitial filling agent (IFA) comprises at least one "ose" fraction selected from hydrosoluble or hydrodispersible oses, osides or polyholosides (polysaccharides) and mixtures thereof, advantageously up to 50%, preferably up to 20% of the weight of the sum of the interstitial filling agent (IFA) and emulsifying agent (E).

12. A dry emulsion according to any one of the preceding claims, **characterized in that** the active ingredients (IA) used in the food industry are selected from mono-, di- and triglycerides, essential oils, colouring agents, food flavourings, oleoresins, extracts and edible oils such as sunflower seed oil, soya oil or grapeseed oil.

13. A dry emulsion according to any one of the preceding claims, **characterized in that** the dry mass ratio of the active ingredient (IA) to the sum of the active ingredient (IA), interstitial filling agent (IFA) and emulsifying agent (E) is at least 0.2, advantageously at least 0.6.

14. A dry emulsion according to any one of the preceding claims, **characterized in that** the dry mass ratio of the active ingredient (IA) to the sum of the active ingredient (IA), the interstitial filling agent (IFA) and the emulsifying agent (E) is at most 0.9.

15. A two-step process for preparing dry emulsion according to any one of claims 1 to 14, comprising the following steps:
i) a first step consisting of preparing a dispersion in water or in an aqueous phase comprising at least one hydrophobic active ingredient (IA), at least one emulsifying agent (E) and at least one filling agent (IFA);
ii) a second step consisting of drying said dispersion until a dry emulsion is produced.

16. A process according to the preceding claim, **characterized in that** the dispersion prepared in step i) has the following granulometry:
• a d₈₀, advantageously d₉₀, of at most 50 µm (micrometre), advantageously 30 µm, preferably 10 µm;
• a d₂₀, advantageously d₁₀, of at least 0.1 µm, advantageously 0.5 µm, preferably 1 µm (micrometre).

17. A process according to claim 15 or claim 16, **characterized in that** the dry emulsions are advantageously in the form of granules with the following granulometry:
• a d₈₀, advantageously d₉₀, of at most 500 µm (micrometre), advantageously 200 µm, preferably 150 µm;
• a d₂₀, advantageously d₁₀, of at least 5 µm (micrometre), advantageously 10 µm, preferably 20 µm.

18. Use of dry emulsions according to any one of claims 1 to 14 for the production of a composition for food use of the emulsified sauce type such as "vinaigrette", "mayonnaise", "gribiche" or "roux" type sauces.

19. Use of dry emulsions according to any one of claims 1 to 14 for the production of a composition for food use of the emulsified sauce type such as "béarnaise", "Choron", "maltaise", "hollandaise", "white butter" or "red butter" type sauces.

20. Use of dry emulsions according to any one of claims 1 to 14, for the production of a composition for food use of the brioche or oil fougasse type fat phase.

21. A composition for food use of the emulsified or fat phase sauce type comprising a dry emulsion-according to any one of claims 1 to 14.

## Patentansprüche

1. Trockene Emulsion, **dadurch gekennzeichnet, dass** diese durch Trocknung einer Dispersion wenigstens eines wenig wasserlöslichen essbaren Materials, welches ebenfalls aktives Material (MA) genannte wird, in einer kontinuierlichen Phase erhalten werden kann, umfassend:
- wenigstens einen Emulgator (E), der wenigstens ein pflanzliches Protein, das teilweise hydrolysiert ist, oder ein Proteinlysat enthält, bei welchem der Hydrolysegrad zwischen 0, ausschließlich, und kleiner 5 % liegt, und
- wenigstens ein Mittel zum Auffüllen der Zwischenräume (ARI), das wasserlöslich oder in Wasser dispergierbar ist, welches wenigstens ein pflanzliches Protein, das teilweise hydrolysiert ist, oder ein Proteinlysat enthält, bei welchem der Hydrolysegrad zwischen 5 und 40 % liegt.

2. Trockene Emulsion nach Anspruch 1, **dadurch gekennzeichnet, dass** das Lysat in dem Emulgator (E) als Proteinfragment, in Bezug auf die Masse, wenigstens die Hälfte, bevorzugt 2/3, insbesondere 3/4 an Proteinfragmenten mit wenigstens 10, vorzugsweise wenigstens 15 Aminosäuren, umfasst.

3. Trockene Emulsion nach einem der Ansprüche 1 oder 2, **dadurch gekennzeichnet, dass** das Lysat in dem Emulgator (E) als Proteinfragment, in Bezug auf die Masse, wenigstens die Hälfte, vorzugsweise 2/3, insbesondere 3/4 an Proteinfragmenten mit höchstens ca. 200 Aminosäuren, vorzugsweise höchstens ca. 100 Aminosäuren, umfasst.

4. Trockene Emulsion nach irgendeinem der Ansprüche 1 bis 3, **dadurch gekennzeichnet, dass** das Lysat in dem Emulgator (E) als Proteinfragment, in Bezug auf die Masse, wenigstens die Hälfte, vorzugsweise 2/3, insbesondere 3/4 an Proteinfragmenten, die zwischen 10 und 100 Aminosäuren, vorzugsweise zwischen 15 und 70 Aminosäuren aufweisen, umfasst.

5. Trockene Emulsion nach irgendeinem der Ansprüche 1 bis 4, **dadurch gekennzeichnet, dass** der Emulgator (E) in der kontinuierlichen Phase in einer Menge vorliegt, die kleiner als 10 % ist und vorzugsweise zwischen 1 und 3 % liegt, ausgedrückt als Masseprozent bezogen auf das aktive Material.

6. Trockene Emulsion nach irgendeinem der vorhergehenden Ansprüche, **dadurch gekennzeichnet, dass** das Mittel zum Auffüllen der Zwischenräume (ARI) eine Wasserlöslichkeit aufweist, die ausgedrückt bezogen auf die Masse des gelösten Stoffes zu der Masse des Lösungsmittels wenigstens 1 % entspricht.

7. Trockene Emulsion nach irgendeinem der Ansprüche 1 bis 6, **dadurch gekennzeichnet, dass** das Mittel zum Auffüllen der Zwischenräume (ARI) in der kontinuierlichen Phase in einer Menge von wenigstens 10 % und von höchstens 80 % vorliegt, ausgedrückt als Masseprozent bezogen auf das gesamte trockene Material,

8. Trockene Emulsion nach Anspruch 7, **dadurch gekennzeichnet, dass** das Mittel zum Auffüllen der Zwischenräume (ARI) in einer Menge vorliegt, die zwischen 20 % und 60 % liegt, ausgedrückt als Masseprozent bezogen auf das gesamte trockene Material.

9. Trockene Emulsion nach irgendeinem der Ansprüche 1 bis 8, **dadurch gekennzeichnet, dass** das Mittel zum Auffüllen der Zwischenräume (ARI) durch eine verstärkte Lyse erhalten wird, insbesondere um Proteinfragmente zu ergeben, welche wenigstens 2/3 der Masse von diesen ausmachen und höchstens ca. 50 Aminosäuren, vorzugsweise höchstens 20 Aminosäuren, aufweisen.

10. Trockene Emulsion nach irgendeinem der Ansprüche 1 bis 9, **dadurch gekennzeichnet, dass** das Mittel zum Auffüllen der Zwischenräume (ARI) Zucker und/oder Oligomere der letzteren umfasst.

11. Trockene Emulsion nach irgendeinem der Ansprüche 1 bis 10, **dadurch gekennzeichnet, dass** das Mittel zum Auffüllen der Zwischenräume (ARI) wenigstens eine "Saccharid"-Fraktion aufweist, die ausgewählt ist aus den Einfachzuckern, den Mehrfachzuckern oder Glycanen (Polysacchariden), die in Wasser löslich oder in Wasser dispergierbar sind, und deren Mischungen, und dass dieses vorzugsweise bis zu 50 %, insbesondere bis zu 20 % der Masse aus der Summe des Mittels zum Auffüllen der Zwischenräume (ARI) und des Emulgators (E) vorliegt.

12. Trockene Emulsion nach irgendeinem der vorhergehenden Ansprüche, **dadurch gekennzeichnet, dass** die aktiven Materialien (MA), welche im Nahrungsmittelbereich verwendet werden, ausgewählt sind aus den Mono-, Di- und Triglyceriden, den etherischen Ölen, den Farbstoffen, den Nahrungsmittelaromastoffen, den Oleoresinen, den Extrakten, den Speiseölen wie z. B. Sonnenblumenöl, Sojaöl, Traubenkernöl.

13. Trockene Emulsion nach irgendeinem der Ansprüche, **dadurch gekennzeichnet, dass** das Masseverhältnis im Trockenen zwischen dem aktiven Material (MA) und der Summe des aktiven Materials (MA), des Mittels zum Auffüllen der Zwischenräume (ARI) und des Emulgators (E) wenigstens gleich 0,2, vorzugsweise wenigstens gleich 0,6 ist.

14. Trockene Emulsion nach irgendeinem der Ansprüche, **dadurch gekennzeichnet, dass** das Masseverhältnis im Trockenen zwischen dem aktiven Material (MA) und der Summe des aktiven Materials (MA), dem Mittel zum Auffüllen der Zwischenräume (ARI) und des Emulgators (E) höchstens gleich 0,9 ist.

15. Verfahren zur Herstellung, in zwei Schritten, von trockenen Emulsionen nach irgendeinem der Ansprüche 1 bis 14, welches die nachstehenden Schritte umfasst:
i) der erste Schritt besteht aus dem Herstellen einer Dispersion in Wasser oder in einer wässrigen Phase, welche wenigstens ein aktives hydrophobes Material (MA), wenigstens einen Emulgator (E) und wenigstens ein Füllmittel (ARI) umfasst;
ii) der zweite Schritt besteht aus dem Trocknen der genannten Dispersion bis zur Bildung einer trockenen Emulsion.

16. Verfahren nach dem vorhergehenden Anspruch, **dadurch gekennzeichnet, dass** die Dispersion, welche im Schritt (i) hergestellt wird, die folgende Korngrößenverteilung aufweist:
• der d₈₀, vorzugsweise der d₉₀, beträgt höchstens 50 µm (Mikrometer), vorzugsweise 30 µm, insbesondere 10 µm;
• der d₂₀, vorzugsweise der d₁₀, beträgt wenigstens 0,1 µm, vorzugsweise 0,5 µm, insbesondere 1 µm (Mikrometer).

17. Verfahren nach einem der Ansprüche 15 oder 16, **dadurch gekennzeichnet, dass** die trockenen Emulsionen vorzugsweise in Form von Granalien vorliegen, wobei die Granalien eine solche Korngrößenverteilung aufweisen wie:
• der d₈₀, vorzugsweise der d₉₀, beträgt höchstens 500 µm (Mikrometer), vorzugsweise 200 µm, insbesondere 150 µm;
• der d₂₀, vorzugsweise der d₁₀, beträgt wenigstens 5 µm (Mikrometer), vorzugsweise 10 µm, insbesondere 20 µm.

18. Verwendung von trockenen Emulsionen nach irgendeinem der Ansprüche 1 bis 14 zur Herstellung einer Zusammensetzung zur Verwendung als Nahrungsmittel vom Typ einer emulgierten Soße wie beispielsweise den Soßen vom "Typ Vinaigrette", "Typ Mayonnaise", "Typ Gribiche", "Typ Mehlschwitze".

19. Verwendung von trockenen Emulsionen nach irgendeinem der Ansprüche 1 bis 14 zur Herstellung einer Zusammensetzung zur Verwendung als Nahrungsmittel vom Typ einer emulgierten Soße wie z. B. den Soßen vom "Typ Béarnaise", "Typ Choron", "Typ Maltaise", "Typ Hollandaise", "Typ Beurre Blanc", "Typ Beurre Rouge".

20. Verwendung von trockenen Emulsionen nach irgendeinem der Ansprüche 1 bis 14 zur Herstellung einer Zusammensetzung zur Verwendung als Nahrungsmittel vom Typ eines Fettgebäcks des Typs Brioche oder des Typs Fougasse mit Öl.

21. Zusammensetzung zur Verwendung als Nahrungsmittel vom Typ einer emulgierten Soße oder eines Fettgebäcks, umfassend eine trockene Emulsion nach irgendeinem der Ansprüche 1 bis 14.
